# EUROPEAN PATENT APPLICATION

(11) **EP 1 002 910 A2**
(43) Date of publication of application: **24.05.2000**
(21) Application number: 99309261.8
(22) Date of filing: 22.11.1999
(51) Int. Cl.: E04B 1/26, E04H 17/14, A01G 1/08

(54) **Hinged connecting section**

(30) Priority: 20.11.1998 US 197098
(71) Applicant: Rivera, Daniel R, Stoneham, Massachusettss 02180-2218 (US)
(72) Inventor: Rivera, Daniel R, Stoneham, Massachusettss 02180-2218 (US)
(74) Representative: Hogg, Jeffery Keith

(57) **Abstract**

A building method and assembly employ an integral hinge section having a receiving section for securely receiving an elongated building member and a pivot section integral with the receiving section and able to lockably mate, in any of a plurality of angular positions, with an inverted pivot section of a second hinge section. The receiving section typically attaches to the building member in a secure manner and the pivot section has a surface having at least one locking pin and a plurality of pin receiving holes. Such surfaces, when juxtaposed to each other, provide a plurality of angular locking positions for an opposed pair of hinge sections. As a result, the elongated building members can be stacked and secured using a single hinge pin to provide stability and rotational flexibility.

## Description

### Background of the Invention

The invention relates generally to apparatus for constructing walls and supports, and in particular, to an hinged outdoor building structure having position locking capabilities.

It often occurs, in connection with outdoor landscaping, that fence-type support structures are needed to define separations between two areas. The structure may act simply as a divider, such as a fence, or it may act to hold back an earthen area, for example a free standing garden, a terraced grade, etc. For ease of use, and economy, it is desirable that such structures have great flexibility, enabling the user, often an individual who is not a professional in this field, to be able to plan the structure without requiring a substantial outlay for specialized tools, and/or custom cut parts. It is also desirable even after the planning stage, and in the building stage, to be able to vary the original plan without loss of material.

Furthermore, since fence-type structures may be tall, or the structures may be used to hold back or enclose large masses of earth and other fill, the final structure should be strong enough to withstand normal use and harsh environments.

Accordingly, it is an object of the invention to provide a flexible, inexpensive, easily used, building aid in the construction of fence-like structures. Another object of the invention is to enable a single connector or link section to be flexibly used by the casual builder as well as the more professional builder to provide an attractive and stable structure.

### Summary of the Invention

The invention relates to an integral hinge section featuring a receiving section for securely receiving an elongated building member and a pivot section integral with the receiving section enable to lockably mate in any of a plurality of angular positions with an inverted pivot section of a second hinge section.

The invention further relates, in a particular embodiment, to an integral hinge section featuring a receiving section defining an open cavity for receiving an elongated building member, sides of the section having pass-through fastener access holes, and an integral solid rounded pivot section, the base of which extends from a closed end of the receiving section and which has a hinge pass-through opening. The solid pivot section is preferably substantially coplanar with the receiving section along one surface normal to the hinge pass-through opening and is no more than half the height of the receiving section in the direction of the hinge pass-through opening. The solid pivot section has at least one locking pin and at least one pin receiving hole in a surface at an opposite side of the pivot section to the one normal surface.

In particular embodiments, the pivot section features a height which is one half the height of the receiving section. Further, the pivot section has one locking pin and a plurality of pin receiving holes, and the receiving section is a substantially squared off U-shaped section in which the fastener holes are in the legs of the section.

### Brief Description of the Drawings

Other objects, features and advantages of the invention will be apparent from the following description, taken together with the drawings, in which:
Figure 1 is a perspective view of a pair of hinge sections in accordance with the invention;
Figure 2 is an assembly view, without building members, of the hinge section of Figure 1;
Figure 3 is one illustrative illustration of the use of the hinge sections in the construction of a fence having a hinged gate opening;
Figure 4 is a perspective view of the hinge section according to an alternate embodiment of the invention; and
Figure 5 is a cross-sectional view of the hinge section of Figure 4.

### Description of a Particular Embodiment of the Invention

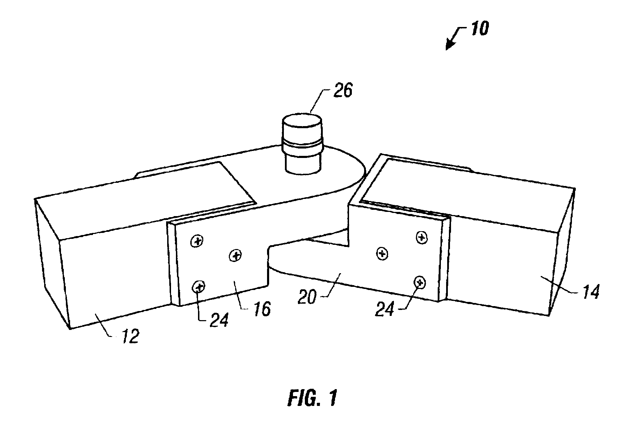

Referring to Figure 1, a system 10 for connecting to elongated building members 12 and 14 in a selectively fixed hinged arrangement has, in this illustrated embodiment, two identical hinge supporting sections 16 and 20. The elongated members 12 and 14 are connected in a fixed arrangement using screw elements 24 to the respective hinge sections 16 and 20. The hinge sections interconnect in a stable environment using a hinge pin 26.

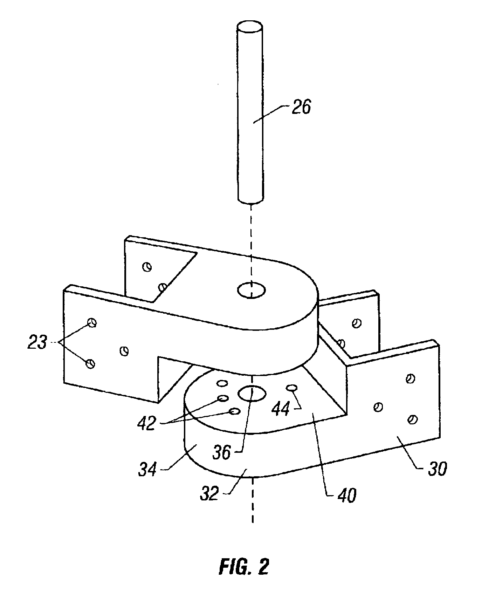

Referring more particularly to Figure 2, each hinge section has a squared-off, preferably U-shaped receiving section 30 for receiving an elongated building member and is configured for attaching the elongated member to the receiving section 30 of the hinge section. As illustrated herein, a preferred structural arrangement includes pass through screw openings 23 through which screws 24 engage and hold the building elements to the hinge section. Integral with and attached to the receiving section 30 is a pivot section 32. The pivot section is preferably a solid element, in the preferred embodiment of the invention, having a rounded, U-shaped end 34 and a pass through opening 36 into which a hinge pin can be inserted. The U-shaped cross section of the pivot section 34 extends from the receiving section 30. In the preferred embodiment of the invention, the height of the hinge section is half the height of the receiving section so that when two end sections are hingedly interconnected in a locked position, the total height of the assembly is substantially constant.

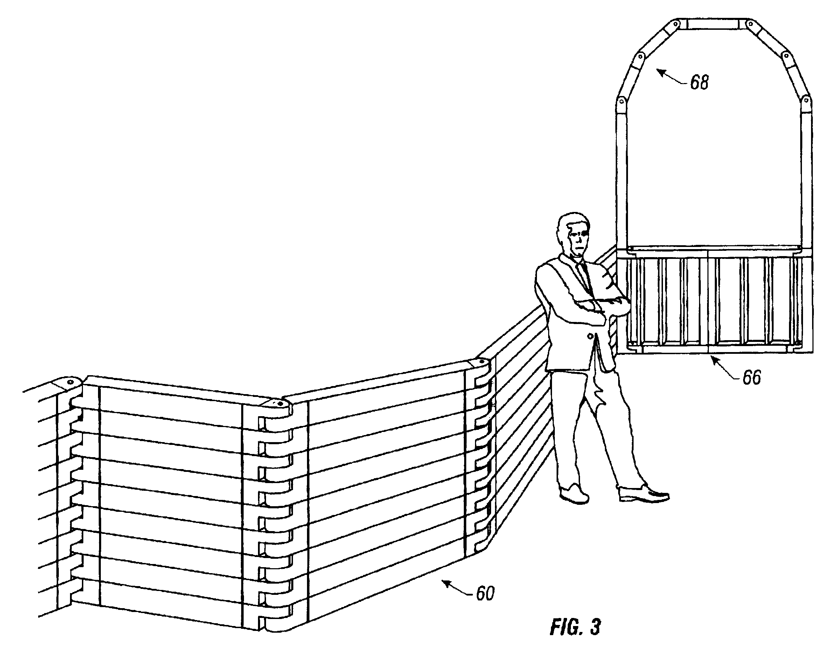

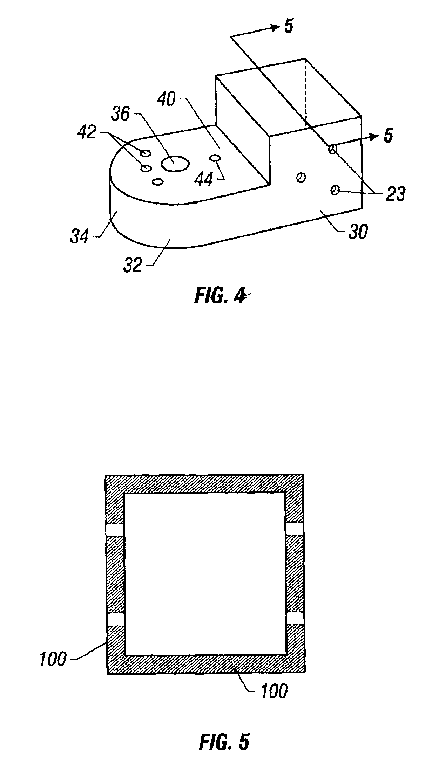

Each hinge section 16, 20 has on a face 40 of the pivot section, a plurality of spaced holes 42 and a pin member 44. When two hinge sections are placed in an operative relationship to each other, as illustrated in Fig. 5, the respective pins 44 are positioned to insert into one of the plurality of hole members 42 on the opposite juxtaposed section. When so inserted, the relative angular position of the two sections is fixed and immovable, although it can be easily changed to suit the user by lifting the sections apart and repositioning the pins. In this manner, a plurality of different fixed angular positions can be obtained, depending upon the need of the installation. Thus, for example, a fence 60 (Figure 3) or earth enclosure can be constructed. Indeed, the hinged sections can also be employed for providing many hinged arrangements, for example, for swinging gates 66 or archways 68.

Different hinge arrangements will be desirable depending upon the nature of the structure being constructed. Thus, for a fence structure as illustrated in Figure 3, it will likely be desirable to use a long single rod as the hinge element, the rod passing through a plurality of hinge assemblies and forced into the earth, for example by using a hammer. The top of the structure can then be advantageously capped to provide a neat and attractive appearance. On the other hand, in connection with a swinging gate structure, while the bottom hinge connection can be stabilized by driving a pivot rod into the earth, the upper gate hinge pair are stabilized using a nut and bolt hinge arrangement. In either instance, suitable ornamental capping can be applied to present a neat and attractive appearance.

While the invention has been illustrated with a particular shape and securing structure, it should be clear to one of skill in the field that other shapes will be equally practical. Thus, for example, the height of the various elements need not be equal to provide a constant height surface when in a final arrangement. Further, the U-shaped receiving section can be other than squared-off in shape, and may be closed at its top and bottom (Figs. 4 and 5) to provide a greater structural integrity if desired. (Here, the cavity formed by walls 100 receives the elongated building member.) Similarly, the section need not be a solid member but may be hollowed or open in order to reduce its weight, provided the necessary structural integrity is maintained. Similarly, while a U-shaped section is preferred, other cross-sectional shapes, which functionally achieve the result within the scope of the description herein, can be employed.

Additions, subtractions, and other modifications of the described invention will be apparent to those practiced in this field and are within the scope of the following claims.

## Claims

1. An integral hinge section comprising
a receiving section for securely receiving an elongated building member, and
a pivot section integral with the receiving section and able to lockably mate, in any of a plurality of angular positions, with an inverted pivot section of a second hinge section.

2. An integral hinge section comprising
a receiving section defining an open cavity for receiving an elongated building member, at least one side of the section having pass-through fastener access holes, and
an integral solid rounded pivot section extending from a closed end of said receiving section and having a hinge pass-through opening,
said solid pivot section being substantially co-planar with said receiving section along one surface normal to said hinge pass-through opening and having no more than half the height of said receiving section in the direction of said hinge pass-through opening, and
said solid pivot section having at least one locking pin and at least one pin receiving hole in a surface at an opposite side of said pivot section to said one normal surface.

3. The hinge section of claim 2 wherein said pivot section has a height which is one-half the height of the receiving section.

4. The hinge section of claim 2 wherein said pivot section has one locking pin and a plurality of pin receiving holes.

5. The hinge section of claim 2 further wherein said receiving section is a substantially squared off U-shaped section and said fastener holes are in the legs of the squared-off section.

6. The hinge section of claim 5 further wherein said pivot section has a substantially circular cross-sectional shape at a base of a U-shape.

7. The hinge section of claim 2 wherein said hinge pass-through opening is normal to said fastener access holes.

8. The hinge section of claim 2 wherein the receiving section is closed at its top and bottom surfaces.

9. An integral hinge section comprising
a U-shaped receiving section defining an open cavity for receiving an elongated building member, at least one side of the U-shaped section having pass-through fastener access holes, and
an integral, solid, rounded, U-shaped pivot section extending from a closed end of the U-shaped receiving section and having a hinge pass-through opening normal to its U-shaped cross section, the pivot section having a height which is one-half the height of the receiving section in a direction normal to said U-shaped cross section, the pivot section having a locking pin and a plurality of pin receiving holes in a surface opposite to a side of the pivot section which is substantially co-planar with the receiving section along one surface thereof, and
said receiving section being substantially a squared-off U-shaped section and the fastener holes being in the legs of the squared-off section, and
the hinge pass-through opening being normal to the plane of the fastener access holes.

10. A support assembly having a plurality of hinged interlocking rotatable and lockable sections, each section having an elongated building member, the building member having, at at least one end, an integral hinge section comprising
a receiving section for securely receiving the elongated building member, and
a pivot section integral with the receiving section and able to lockably mate, in any of a plurality of angular positions, with an inverted pivot section of a second hinge section connected to a different elongated building member.

11. The assembly of claim 10 further comprising at least one hinge pin extending through a plurality of the integral hinge sections for providing a common axis of rotation for each of the lockable integral hinge sections.
